# EUROPÄISCHE PATENTANMELDUNG

(11) **EP 1 419 981 A1**
(43) Veröffentlichungstag der Anmeldung: **19.05.2004**
(21) Anmeldenummer: 03026050.9
(22) Anmeldetag: 12.11.2003
(51) Int. Cl.: B65G 19/02, B65G 47/61

(54) **Hängefördereinrichtung zum Transport von Fördergut an Hakenträgern, insbesondere an Kleiderbügeln**

(30) Priorität: 13.11.2002 DE 10252807
(71) Anmelder: WF Logistik GmbH, 86899 Landsberg (DE)
(72) Erfinder: Braunmüller, Walter, 86916 Kaufering (DE)
(74) Vertreter: Tiesmeyer, Johannes, Dr.

(57) **Zusammenfassung**

Es wird eine Hängefördereinrichtung zum Transport von Fördergut an Hakenträgern (7) vorgeschlagen. Die Hängefördereinrichtung umfasst Förderstrecken, denen eine jeweilige Führungsschienenanordnung (1,15) zur Führung betreffender Hakenträger (7) längs der Förderstrecke sowie längs der Führungsschienenanordnung (1,15) geführtes Endlos-Antriebszugmittel (18) mit einer Vielzahl daran angeordneter Mitnehmerelemente (11,19) zur Einzelmitnahme von Hakenträgern (7) zugeordnet sind. Zwischen einer ersten und einer zweiten Förderstrecke ist eine Übergabestation (25) zur Überleitung von Hakenträgern (7) von der ersten Förderstrecke zur zweiten Förderstrecke vorgesehen, wobei die Antriebszugmittel (18) der beiden Förderstrecken nahe der Übergabestation (25) so geführt sind, dass die von dem Antriebszugmittel der ersten Förderstrecke bewegten Mitnehmerelemente (11) den Mitnahmekontakt zu mitgeführten Hakenträgern (7) verlieren und die von dem Antriebszugmittel (18) der zweiten Förderstrecke bewegten Mitnehmerelemente (19) in Mitnahmekontakt mit solchen an der Übergabestation (25) von den Mitnehmerelementen (11) der Antriebszugmittel der ersten Förderstrecke freikommenden Hakenträgern (7) kommen können, um diese längs der zweiten Förderstrecke mitzunehmen.

## Beschreibung

Die Erfindung betrifft eine Hängefördereinrichtung zum Transport von Fördergut an Hakenträgern, insbesondere an Kleiderbügeln, wobei die Hängefördereinrichtung Förderstrecken aufweist, denen eine jeweilige Führungsschienenanordnung zur Führung betreffender Hakenträger längs der Förderstrecke sowie ein jeweiliges längs der Führungsschienenanordnung geführtes, zur umlaufenden Bewegung angetriebenes Endlos-Antriebszugmittel, insbesondere Antriebskette, mit einer Vielzahl daran angeordneter Mitnehmerelemente zur Einzelmitnahme von Hakenträgern längs der Förderstrecke zugeordnet sind.

Derartige Hängefördereinrichtungen werden beispielsweise zum Transport von an Kleiderbügeln hängenden Bekleidungsstücken verwendet. Dabei ist im Normalfall jedes Mitnehmerelement zur jeweiligen Mitnahme eines einzelnen Kleiderbügels vorgesehen, so dass die Kleiderbügel hintereinander in vorzugsweise gleichen Abständen die Förderstrecke durchlaufen. In der DE 29809909 U1 ist eine derartige Hängefördereinrichtung als Klinkenförderer beschrieben. Die zu transportierenden Kleiderbügel hängen mit ihrem Haken an einer Führungsschiene, bei der es sich um eine Gleitschiene handelt. Auf dieser Gleitschiene werden sie durch Mitnehmerklinken entlanggeschoben, die an einer Antriebskette angekoppelt sind. Im Beispielsfall der DE 29809909 U1 sind die Mitnehmerklinken über der Gleitschiene angeordnet und weisen an ihrer Unterseite Kerben auf, mit denen sie auf die Kleiderbügel abgesenkt sind. Die Hängefördereinrichtung nach der DE 29809909 U1 ist als Klinkensortierförderer ausgestaltet, welcher mehrere Weichen umfasst, mittels welcher die von den Mitnehmerklinken zugeführten Kleiderbügel bedarfsweise aus der Förderstrecke ausgeschleust und an eine jeweilige nach unten ableitende Rutschstange bzw. Abwurframpe übergeben werden können. Nach dem Ausschleusen der Kleiderbügel aus der zuführenden Förderstrecke erfolgt die Bewegung der Kleiderbügel normalerweise ausschließlich unter Wirkung der Schwerkraft, ggf. unterstützt von Menschenhand, wobei die Kleiderbügel dann normalerweise nicht mehr einzeln in definierten Abständen voneinander bewegt werden.

Es sind auch Klinkenförderer bekannt, bei denen die Mitnehmerklinken jeweils eine nach oben offene Kerbe haben, in der ein Haken eines Kleiderbügels von oben her aufgenommen ist. Ein Beispiel für einen derartigen Klinkenförderer findet man in der DE 9209392 U1.

Es sind auch bereits Fördereinrichtungen der eingangs genannten Art bekannt, bei denen die Mitnehmerelemente Stifte sind. Solche Fördereinrichtungen werden gelegentlich auch als Pin-Förderer bezeichnet. Dabei gibt es Ausführungsformen, bei denen die Stifte von einer Antriebskette nach oben hin abstehen, um oberhalb und in Bewegungsrichtung der Antriebskette geführte Kleiderbügel in Mitnahmeeingriff nehmen zu können. Die Stifte erstrecken sich dabei durch eine oben offene Aussparung in der auch als Kettenführung dienenden Führungsschiene für die Kleiderbügel. Bei einer anderen Ausführungsform stehen die Stifte von der Antriebskette nach unten hin ab, so dass sie an einer unterhalb der Antriebskette verlaufenden Führungsschiene geführte Kleiderbügel von oben her in Mitnahmeeingriff nehmen kann.

Zum Stand der Technik wird ferner auf die DE 20205777 U1 verwiesen, welche einen auf der Basis eines solchen Pin-Förderers aufgebauten Sortierförderer betrifft, bei dem an einer Übergabestation ein gesondertes Antriebsrad mit Ausschleusmitnehmerelementen vorgesehen ist. Sofern eine Weichenzunge an der Übergabestation in Ausschleusstellung geschaltet ist, können die Ausschleusmitnehmerelemente die zugeführten Kleiderbügel in Mitnahmeeingriff nehmen, um sie an eine nach unten ableitende Rutschstange weiterzugeben. Im Bereich der Rutschstange erfolgt der Transport unter der Wirkung der Schwerkraft, ggf. unterstützt von Menschenhand. Eine Einzelförderung mit definierten Abständen der Kleiderbügel voneinander findet dann an der ableitenden Rutschstange nicht mehr statt.

Der Erfindung liegt die Aufgabe zugrunde, eine Hängefördereinrichtung der eingangs genannten Art bereitzustellen, bei der Hakenträger mittels einer auf einfache Weise realisierbaren Übergabestation von einer Förderstrecke zu einer weiteren Förderstrecke weitergereicht werden können, ohne das Prinzip der Einzelförderung der Hakenträger bei deren Transport längs der weiteren Förderstrecke aufzugeben.

Zur Lösung dieser Aufgabe wird erfindungsgemäß vorgeschlagen, dass zwischen wenigstens zwei solcher Förderstrecken, nämlich zwischen einer ersten Förderstrecke und einer zweiten Förderstrecke, eine Übergabestation zur Überleitung von Hakenträgern von der ersten Förderstrecke zur zweiten Förderstrecke vorgesehen ist, wobei die Antriebszugmittel der beiden Förderstrecken nahe der Übergabestation so geführt sind, dass an der Übergabestation die von dem Antriebszugmittel der ersten Förderstrecke bewegten Mitnehmerelemente den Mitnahmekontakt zu mitgeführten Hakenträgern verlieren und die von dem Antriebszugmittel der zweiten Förderstrecke bewegten Mitnehmerelemente in Mitnahmekontakt mit solchen an der Übergabestation von den Mitnehmerelementen der Antriebszugmittel der ersten Förderstrecke freikommenden Hakenträger kommen können, um diese längs der zweiten Förderstrecke mitzunehmen.

Die Übergabestation weist eine ggf. als schaltbare Weichenzunge ausgebildete Ausschleusführung auf, welche Hakenträger von der einen Führungsschienenanordnung zur anderen Führungsschienenanordnung führen kann. Vorzugsweise findet im Bereich dieser Ausschleusführung die Einzelübergabe der Hakenträger von den Mitnehmerelementen der ersten Förderstrecke zu den Mitnehmerelementen der zweiten Förderstrecke statt. Dabei trennen sich die Wege der Mitnehmerelemente der ersten Förderstrecke einerseits und der von ihnen zu der Ausschleusführung transportierten Hakenträger andererseits, wobei jedoch die Mitnehmerelemente der zweiten Förderstrecke die freigegebenen Hakenträger im Bereich der Ausschleusführung in Eingriff nehmen können, um sie dann einzeln längs der weiteren Förderstrecke zu transportieren. Da für den Antrieb der Hakenträger beim Übergang von der einen Förderstrecke zur weiteren Förderstrecke die diesen Förderstrecken ohnehin zugeordneten Antriebsmittel und Mitnehmerelemente zum Einsatz kommen, erübrigt es sich, gesonderte Antriebsmittel für den Transfer der Hakenträger zwischen den Förderstrecken vorzusehen. Der erfindungsgemäß erreichte Verzicht auf solche gesonderten Transfer-Antriebsmittel erleichtert auch die Abstimmung bzw. Synchronisation der Förderbewegungsabläufe auf den beiden Förderstrecken und an der Übergabestation.

Vorzugsweise hat das Antriebszugmittel der ersten Förderstrecke an der Übergabestation einen vertikalen Abstand zu dem Antriebszugmittel der zweiten Förderstrecke, wobei die Mitnehmerelemente des an der Übergabestation vertikal unteren Antriebszugsmittels nach oben hin abstehen, wohingegen die Mitnehmerelemente des an der Übergabestation vertikal oberen Antriebszugmittels nach unten hin abstehen. Auf diese Weise wird erreicht, dass die Antriebszugmittel der beiden Förderstrecken im Bereich der Übergabestation an bezüglich der Platzverteilung günstiger Stelle ohne Gefahr der gegenseitigen Behinderung untergebracht werden können und dennoch eine störungsfreie wechselweise oder ggf. jeweils gleichzeitige Zuführung von Mitnehmerelementen der beiden Förderstrecken zu einem räumlich eng begrenzten Bereich der Hakenträgerübergabe an der Übergabestation gewährleistet werden kann.

Wenngleich in einer Ausführungsform der Erfindung die beiden Förderstrecken im Bereich der Übergabestation in einer gemeinsamen horizontalen Ebene liegen können und eine beispielsweise als schaltbare Weichenzunge ausgebildete Ausschleusführung in entsprechender Schaltstellung Hakenelemente zur Bewegung von der einen Förderstrecke zur zweiten Förderstrecke unter Wechsel des Schleppantriebs von den Mitnehmerelementen der ersten Förderstrecke zu den Mitnehmerelementen der zweiten Förderstrecke zwingt, so ist es gemäß einer bevorzugten Ausführungsform der Erfindung vorgesehen, dass an der Übergabestation die dem vertikal oberen Antriebszugmittel zugeordnete Führungsschienenanordnung höher als die dem vertikal unteren Antriebszugmittel zugeordnete Führungsschienenanordnung verläuft und dass eine rampenartige Ausschleusführung zur Überbrückung des vertikalen Abstandes zwischen der unteren Führungsschienenanordnung und der oberen Führungsschienenanordnung an der Übergabestation vorgesehen ist. Eine solche rampenartige Ausschleusführung ermöglicht auf einfache Weise die Übergabe eines Hakenträgers von einem vertikal nach oben abstehenden Mitnehmerelement der ersten Förderstrecke zu einem vertikal nach unten hin abstehenden Mitnehmerelemente der zweiten Förderstrecke.

Die Förderstrecken können von Stift-Förderern bzw. Pin-Förderern, bei denen Mitnehmerelemente als Mitnehmerstifte vorgesehen sind, oder/und von Klinkenförderern, bei denen die Mitnehmerelemente als Mitnehmerklinken vorgesehen sind, gebildet sein. Insbesondere ermöglicht die vorliegende Erfindung den Transfer von Hakenträgern zwischen Förderstrecken gleicher Bauart oder zwischen Förderstrecken unterschiedlicher Bauart. So kann gemäß der vorliegenden Erfindung ein Transfer von Pin-Förderer zu Pin-Förderer mit gleicher oder unterschiedlicher Ausrichtung der Mitnehmerstifte oder ein Transfer von Klinkenförderer zu Klinkenförderer mit gleicher oder unterschiedlicher Ausrichtung der Mitnehmerklinken - oder ein Transfer zwischen Klinkenförderer und Pin-Förderer realisiert werden.

Vorzugsweise werden die Antriebszugmittel der Förderstrecken von einer gemeinsamen Antriebseinrichtung angetrieben, wodurch die Synchronisierung der Antriebs und insbesondere die zeitkorrekte Zuführung von Mitnehmerelementen der ersten Förderstrecke und der zweiten Förderstrecke wesentlich erleichtert ist.

Gemäß einer Ausführungsform der Erfindung ist die Förderrichtung der Förderstrecken bedarfsweise umkehrbar, wobei Hakenträger an der Übergabestation von der ersten Förderstrecke zur zweiten Förderstrecke oder von der zweiten Förderstrecke zur ersten Förderstrecke übergeleitet werden können.

Vorzugsweise ist an der Übergabestation eine schaltbare Ausschleusführung in Form einer Weiche vorgesehen, die längs der ersten Förderstrecke zugeführte Hakenträger je nach Weichenstellung auf der ersten Förderstrecke belässt oder zur zweiten Förderstrecke umleitet.

Die Hängefördereinrichtung nach der Erfindung kann gemäß einer bevorzugten Ausführungsform als Sortierfördereinrichtung ausgebildet sein, wobei es sich in diesem Fall anbietet, weitere Förderstrecken der hier betrachteten Art vermittels Übergabestationen an der ersten Förderstrecke anzuschließen, um Hakenträger in gesteuerter Weise nach einem betreffenden Sortierkriterium in die jeweiligen Förderstrecken überleiten zu können. Dabei sollten an den Übergabestationen zweckmäßigerweise steuerschaltbare Weichen vorgesehen sein.

Ein Ausführungsbeispiel der Erfindung wird im Folgenden unter Bezugnahme auf die Zeichnungen näher erläutert.

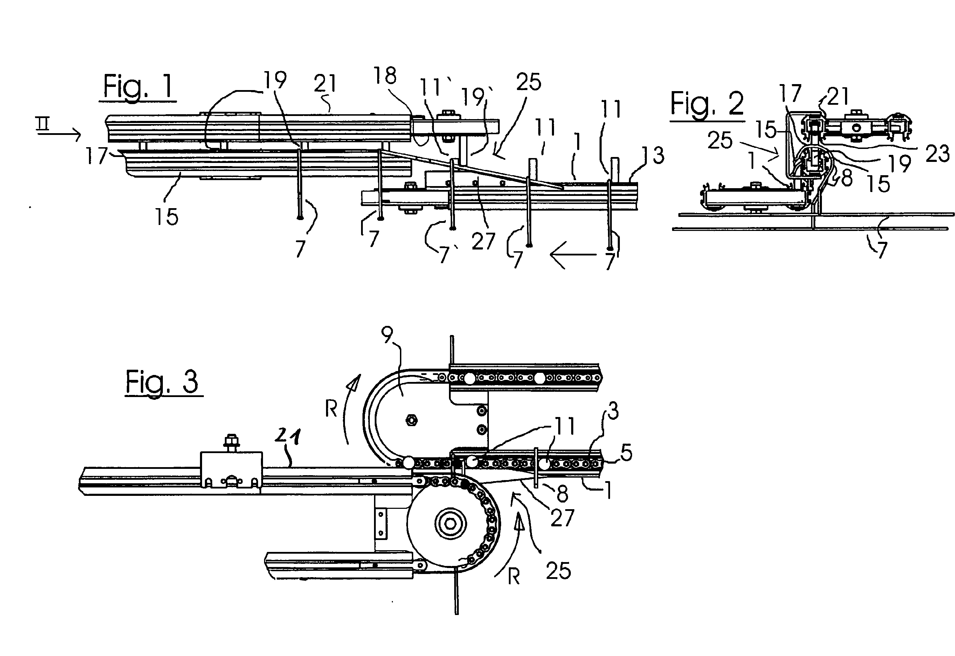

Fig. 1, 2 und 3 zeigen teils schematisch eine Übergabestation mit daran angrenzenden Führungsschienenabschnitten zweier Förderstrecken in drei Ansichten, nämlich in Seitenansicht mit Blickrichtung quer zu den Führungsschienen (Fig. 1), in Vorderansicht mit der in Fig. 1 bei II angedeuteten Blickrichtung längs der Führungsschienen (Fig. 2) und in Draufsicht (Fig. 3).

Eine erste Förderstrecke ist von einer ersten Führungsschienenanordnung aus vorzugsweise im Strangpressverfahren hergestellten Schienenelementen 1 gebildet. Die beispielsweise aus Aluminium gefertigten Führungsschienen 1 weisen eine oben offene Kettenführungsnut 3 auf, die sich in Schienenlängsrichtung erstreckt und eine Kette 5 enthält, welche das Endlos-Antriebszugmittel für den Transport von Hakenträgern 7 längs der ersten Förderstrecke ist.

Die in der Kettenführungsnut 3 geführte Kette 5 wird von einem (nicht gezeigten) Elektromotor zur umlaufenden Bewegung um Umlenkstationen 9 angetrieben, von denen in den Figuren jeweils nur eine erkennbar ist. Die Kettenbewegung an der Umlenkstation 9 ist in Fig. 3 mit einem Pfeil R angedeutet. Die Kette 5 weist nach oben hin aus der Nut 3 heraus über den oberen Rand 13 der Schiene 1 hinaus abstehende Mitnehmerstifte 11 auf, die in im Wesentlichen gleichen Teilungsabständen längs der Kette 5 verteilt sind.

Die in den Figuren gezeigte Hängefördereinrichtung dient zum Transport von Kleidungsstücken (nicht gezeigt) an Hakenträgern, bei denen es sich im Beispielsfall um Kleiderbügel 7 handelt. Während des Transports längs der ersten Förderstrecke hängen die Kleiderbügel 7 mit ihren Haken 8 an der Führungsschienenanordnung 1, wobei sie einzeln von betreffenden Mitnehmerstiften 11 entsprechend der Bewegung der Kette 5 gemäß Fig. 1 von rechts nach links längs der Führungsschiene 1 mitgenommen werden. Die Haken 8 der Kleiderbügel 7 gleiten dabei auf der Führungsschiene 1. Die zweite Förderstrecke ist von einer Führungsschienenanordnung mit Führungsschienen 15 für die Kleiderbügel 7 gebildet. Die Führungsschienen 15 sind vorzugsweise ebenfalls Strangpressprofile und haben eine oben offene Längsnut 17, die entsprechend der Nut 3 der Führungsschiene 1 ausgebildet sein kann. Die Nut 17 dient bei der Führungsschiene 15 jedoch nicht als Kettenführungsnut, sondern als Vertiefung, in die von einer oberhalb der Führungsschiene 15 verlaufenden Endlos-Kette 18 nach unten abstehende Mitnehmerstifte 19 mit ihren freien Enden eintauchen können, so dass sie auf der Führungsschiene 15 hängende Kleiderbügel 7 entsprechend der Bewegung der Kette 18 sicher hintergreifen und mitnehmen können. Im Beispielsfall bewegen sich die Kleiderbügel 7 auf der Führungsschiene 15 der zweiten Förderstrecke gemäß Fig. 1 von rechts nach links.

Die Antriebskette 18 ist in einer Kettenführungsschiene 21 geführt, welche von ihrem Aufbau her den Schienen 13 und 15 im Wesentlichen entspricht, jedoch mit nach unten offener Längsnut 23 angeordnet ist. An dieser offenen Seite erstrecken sich die Mitnehmerstifte 19 von der Kette 18 nach unten.

Wie insbesondere aus Fig. 1 zu erkennen ist, liegt die Führungsschiene 15 der zweiten Förderstrecke höher als die Führungsschiene 1 der ersten Förderstrecke. Zur Überbrückung dieser Höhendifferenz ist an einer Übergabestation bei 25 eine Ausschleusführung in Form einer Rampenschiene 27 vorgesehen. Die Rampenschiene 27 leitet die längs der ersten Förderstrecke zugeführten Kleiderbügel 7 von der Führungsschiene 1 nach oben hin ab, um sie der Führungsschiene 15 der zweiten Förderstrecke zu übergeben. Bei der Aufwärtsbewegung an der Rampenschiene 27 werden die Kleiderbügel 7 zunächst noch von den nach oben hin abstehenden Mitnehmerstiften 11 der ersten Förderstrecke angetrieben, wobei die Mitnehmerstifte 11 jeweils am oberen Bereich der Haken 8 mit den Kleiderbügeln 7 in Mitnahmekontakt stehen. Da die Mitnehmerstifte 11 jedoch in ihrer horizontalen Bewegungsebene verbleiben, verlieren sie den Kontakt zu den von ihnen mitgeführten Kleiderbügeln, sobald diese mit ihren Haken 8 auf der Rampenschiene 27 eine Höhe erreicht haben, die dem Höhenniveau der oberen Enden der Mitnehmerstifte 11 entspricht. In Fig. 1 ist der Haken des an der Rampenschiene 27 geführten Kleiderbügels 7' unmittelbar davor, den Kontakt zu seinem Mitnehmerstift 11 zu verlieren. In dieser Situation ist jedoch bereits ein Mitnehmerstift 19' der zweiten Förderstrecke an der Übergabestation 25 angekommen, so dass er an der Stelle 30 der Rampenschiene 27, an der der Haken 8 des Kleiderbügels 7' von dem Mitnehmerstift 11' der ersten Förderstrecke freikommt, den Haken 8 an dessen oberem Endbereich in Eingriff nehmen kann, um ihn dann längs der Rampenschiene 27 weiter nach oben auf die Führungsschiene 15 der zweiten Förderstrecke zu ziehen. Der betreffende Mitnehmerstift 19' verbleibt dann in Mitnahmekontakt mit dem Haken 8 des Kleiderbügels 7' während der Bewegung längs der Führungsschiene 15.

Die Bewegungen der Antriebsketten 5 und 18 sind so synchronisiert, dass an der Antriebswechselstelle 30 der Rampenschiene 27 jeweils ein Mitnehmerstift 19 zur Verfügung steht, um einen Kleiderbügel 7 an dessen Haken 8 zu hintergreifen, sobald dieser von dem Mitnehmerstift 11 der ersten Förderstrecke freikommt.

Abweichend von dem gezeigten Ausführungsbeispiel könnten weitere Übergabestationen 25 ggf. mit modifizierter Orientierung an der ersten Förderstrecke vorgesehen sein, um Kleiderbügel 7 an weitere Förderstrecken zu übergeben, wobei die Rampenschienen 27 als Weichenzungen ausgebildet sein können, die je nach ihrer Schaltstellung Kleiderbügel aus der ersten Förderstrecke ausschleusen oder in der ersten Förderstrecke belassen. Eine derartige Anordnung eignet sich sehr gut für Sortieraufgaben. Die Hängefördereinrichtung nach der Erfindung ist somit auch als Sortierförderer mit Einzelförderung der Hakenträger auf allen Sortierförderstrecken realisierbar.

## Patentansprüche

1. Hängefördereinrichtung zum Transport von Fördergut an Hakenträgern (7), insbesondere an Kleiderbügeln, wobei die Hängefördereinrichtung Förderstrecken aufweist, denen eine jeweilige Führungsschienenanordnung (1, 15) zur Führung betreffender Hakenträger (7) längs der Förderstrecke sowie ein jeweiliges längs der Führungsschienenanordnung (1, 15) geführtes, zur umlaufenden Bewegung angetriebenes Endlos-Antriebszugmittel (5, 18), insbesondere Schleppkette, mit einer Vielzahl daran angeordneter Mitnehmerelemente (11, 19) zur Einzelmitnahme von Hakenträgern (7) längs der Förderstrecke zugeordnet sind,
**dadurch gekennzeichnet,**
**dass** zwischen wenigstens zwei solcher Förderstrecken, nämlich zwischen einer ersten Förderstrecke und einer zweiten Förderstrecke, eine Übergabestation (25) zur Überleitung von Hakenträgern (7) von der ersten Förderstrecke zur zweiten Förderstrecke vorgesehen ist, wobei die Antriebszugmittel (5, 18) der beiden Förderstrecken nahe der Übergabestation (25) so geführt sind, dass an der Übergabestation (25) die von dem Antriebszugmittel (5) der ersten Förderstrecke bewegten Mitnehmerelemente (11) den Mitnahmekontakt zu mitgeführten Hakenträgern (7) verlieren und die von dem Antriebszugmittel (18) der zweiten Förderstrecke bewegten Mitnehmerelemente (19) in Mitnahmekontakt mit solchen an der Übergabestation (25) von den Mitnehmerelementen (11) der Antriebszugmittel (5) der ersten Förderstrecke freikommenden Hakenträger (7) kommen können, um diese längs der zweiten Förderstrecke mitzunehmen.

2. Hängefördereinrichtung nach Anspruch 1, **dadurch gekennzeichnet, dass** das Antriebszugmittel (5) der ersten Förderstrecke an der Übergabestation (25) einen vertikalen Abstand zu dem Antriebszugmittel (18) der zweiten Förderstrecke hat, dass die Mitnehmerelemente (11) des an der Übergabestation (25) vertikal unteren Antriebszugmittels (5) nach oben hin abstehen und dass die Mitnehmerelemente (19) des an der Übergabestation (25) vertikal oberen Antriebszugmittels (18) nach unten hin abstehen.

3. Hängefördereinrichtung nach Anspruch 2, **dadurch gekennzeichnet, dass** an der Übergabestation (25) die dem vertikal oberen Antriebszugmittel (18) zugeordnete Führungsschienenanordnung (15) höher als die dem vertikal unteren Antriebszugmittel (11) zugeordnete Führungsschienenanordnung (1) verläuft und dass eine rampenartige Ausschleusführung (27) zur Überbrückung des vertikalen Abstandes zwischen der unteren Führungsschienenanordnung (1) und der oberen Führungsschienenanordnung (15) an der Übergabestation (25) vorgesehen ist.

4. Hängefördereinrichtung nach einem der vorhergehenden Ansprüche, **dadurch gekennzeichnet, dass** wenigstens eine der Förderstrecken von einem Stiftförderer gebildet ist, wobei die Mitnehmerelemente Mitnehmerstifte (11, 19) sind.

5. Hängefördereinrichtung nach einem der vorhergehenden Ansprüche, **dadurch gekennzeichnet, dass** wenigstens eine der Förderstrecken von einem Klinkenförderer gebildet ist, wobei die Mitnehmerelemente Mitnehmerklinken sind.

6. Hängefördereinrichtung nach einem der vorhergehenden Ansprüche, **gekennzeichnet durch** eine Antriebseinrichtung zum synchronisierten Antrieb des Antriebszugmittels (5) der ersten Förderstrecke und des Antriebszugmittels (18) der zweiten Förderstrecke derart, dass jeweils ein Mitnehmerelement (11) der ersten Förderstrecke und ein Mitnehmerelement (19) der zweiten Förderstrecke im Wesentlichen gleichzeitig oder unmittelbar aufeinander folgend eine Stelle (30) der Antriebsübergabe an der Übergabestation erreichen.

7. Hängefördereinrichtung nach einem der vorhergehenden Ansprüche, **dadurch gekennzeichnet, dass** die Förderrichtung der Förderstrecken bedarfsweise umkehrbar ist, so dass Hakenträger (7) von der zweiten Förderstrecke zur ersten Förderstrecke an der Übergabestation (25) übergeleitet werden können.

8. Hängefördereinrichtung nach einem der vorhergehenden Ansprüche, **dadurch gekennzeichnet, dass** an der Übergabestation eine schaltbare Ausschleusführung in Form einer Weiche vorgesehen ist, die längs der ersten Förderstrecke zugeführte Hakenträger je nach Weichenstellung auf der ersten Förderstrecke belässt oder zur zweiten Förderstrecke umleitet.

9. Hängefördereinrichtung nach einem der vorhergehenden Ansprüche, **dadurch gekennzeichnet, dass** sie als Sortierfördereinrichtung ausgebildet ist.

10. Hängefördereinrichtung nach einem der vorhergehenden Ansprüche, **dadurch gekennzeichnet, dass** an weiteren Übergabestationen zusätzliche Förderstrecken an der ersten Förderstrecke angeschlossen sind, um Hakenträger von der ersten Förderstrecke zu übernehmen.
